# EUROPÄISCHE PATENTSCHRIFT

(11) **EP 0 929 212 B1**
(45) Veröffentlichungstag und Bekanntmachung des Hinweises auf die Patenterteilung: **04.12.2002**
(21) Anmeldenummer: 97941952.0
(22) Anmeldetag: 21.08.1997
(51) Int. Cl.: A01J 5/08

(54) **ZITZENGUMMI**
RUBBER TEAT ELEMENT
ELEMENT EN CAOUTCHOUC POUR TRAYONS

(30) Priorität: 03.09.1996 DE 19635719
(43) Veröffentlichungstag der Anmeldung: 21.07.1999
(73) Patentinhaber: Siliconform GmbH & CO. KG, 86842 Türkheim (DE)
(72) Erfinder: MAIER, Jakob, D-86842 Türkheim (DE); HOEFELMAYR, Tilman, CH-9052 Niederteufen (CH); LINCKE, Kathrin, D-86842 Türkheim (DE)
(74) Vertreter: Grünecker, Kinkeldey, Stockmair & Schwanhäusser Anwaltssozietät
(86) Internationale Anmeldenummer: EP9704562
(87) Internationale Veröffentlichungsnummer: WO98009506

(56) Entgegenhaltungen:
- EP-A- 0 477 950
- DE-A- 2 518 897
- DE-B- 2 941 150
- US-A- 2 744 496
- US-A- 4 141 319

## Beschreibung

Die Erfindung betrifft einen dem Oberbegriff des Anspruchs 1 entsprechenden Zitzengummi mit einem zu einer Längsachse im wesentlichen rotationssymmetrischen Kopfteil mit einer Einführöffnung für die Zitze, einem Halterand zum Übergreifen einer Melkbecherhülse, sowie einem mit dem Kopfteil verbundenen Saugstutzen.

Aus der US 2,744,496 ist ein Zitzengummi bekannt, bei dem ein im wesentlichen rotationssymmetrischer Kopfteil vorgesehen ist, der an seinem oberen Ende eine Einführöffnung für die Zitze aufweist und der an seinem unteren Ende in einen sogenannten Saugstutzen übergeht. Am Übergang des Kopfteils in den Saugstutzen ist auf der Außenseite ein Halterand zum Übergreifen einer Melkbecherhülse angeformt.

Aus der US 4,141,319 war auch bereits ein Zitzengummi bekannt, das einen erheblich versteiften Halterand aufweist, der einerseits die Melkbecherhülse auf der Außenseite übergreift und andererseits in einem gewissen Abstand in Längsrichtung über den Rand der Melkbecherhülse hinaus vorsteht. An dem axial entfernt liegenden Ende des Halterandes erstreckt sich eine ringförmige Dichtlippe radial einwärts, die auf der gemeinsamen Längsachse eine Öffnung zur Einführung der Zitze aufweist. In die Unterseite dieser Dichtlippe mündet im Abstand von dem Übergang zwischen der Dichtlippe und dem Halterand das der Zitzeneinführöffnung zugewandte Ende des Saugstutzens. Die Ausgestaltung dieses Zitzengummis bewirkt, daß sich der Durchmesser der von der Dichtlippe gebildeten Einführöffnung für die Zitze in der Saugphase erweitert.

Aus der DE 29 41 150 ist bereits ein Zitzengummi bekannt, bei dem der Kopfteil im wesentlichen etwa in Form eines Torus ausgebildet ist, der auf seiner oberen Seite eine auf der Rotationsachse liegende Einführöffnung für die Zitze aufweist und auf seiner entgegengesetzten Seite in den Saugstutzen übergeht. In Höhe des Übergangs des Kopfteils in den Saugstutzen ist auf der Außenseite ein Halterand zum Übergreifen der Melkbecherhülse angeformt. Bei diesem Zitzengummi ist der Durchmesser der Melkbecherhülse verhältnismäßig groß. Andererseits besteht eine hohe Gefahr, daß der Halterand bei Stößen oder Schlägen auf den Melkbecher verhältnismäßig leicht durchschlägt.

Aus der EP 0 477 950 ist auch bereits ein Zitzengummi bekannt, bei dem der Kopfteil im wesentlichen etwa in Form eines Torus ausgebildet ist, an dessen einem Ende ein auf der Rotationsachse liegende Einführöffnung für die Zitze ausgebildet ist. Das entgegengesetzte Ende des Kopfteils geht unmittelbar in das obere Ende des Saugstutzens über. In Höhe des Übergangs des Kopfteils in den Saugstutzen ist ein Halterand zum Übergreifen der Melkbecherhülse ausgebildet. Femer ist auf den oberen Rand der Melkbecherhülse ein Ring aufsetzbar, der in eine entsprechende Ausnehmung des Halterandes zu liegen kommt. Dieser Ring verhindert das Durchschlagen des Halterandes beim unbeabsichtigten Anschlagen des Melkbechers an ein Hindernis.

Der vorliegenden Erfindung liegt die Aufgabe zugrunde, einen Zitzengummi anzugeben, der der Physiologie des zu melkenden Tiers besser gerecht wird.

Diese Aufgabe wird durch einen Zitzengummi der eingangs erwähnten Art gelöst, der sich dadurch auszeichnet, daß der Kopfteil an seinem der Einführungsöffnung für die Zitze gegenüberliegenden Ende in den Halterand übergeht, daß die Wand des Kopfteils im Bereich des größten Außendurchmessers gegenüber den angrenzenden Bereichen versteift ausgebildet ist, daß das der Einführöffnung für die Zitze zugewandte Ende des Saugstutzens in Höhe des versteiften Bereichs in den Kopfteil übergeht, daß der zwischen dem versteiften Bereich und dem Übergang in den Halterand liegende Teil des Kopfteils in bezug auf den versteiften Teil elastisch verformbar ausgebildet ist, und daß dieser Teil des Kopfteils zusammen mit dem der Einführungsöffnung für die Zitze zugewandten Ende des Saugstutzens einen Hohlraum zwischen sich begrenzen. Ein derartiger Zitzengummi hat den Vorteil, daß er sich im Verlauf der aufeinanderfolgenden Saugphase und Entlastungsphase in Längsrichtung der Zitze hebt und senkt, was zu einer Entspannung der Muskulatur am Euter führt. Gleichzeitig wird bei einer Anhebung der außen liegenden Melkbecherhülse in bezug auf den innenliegenden Saugstutzen, der sich gegen das untere Ende der Zitze abstützt, ein leichter, nach abwärts gerichteter Zug auf die Zitze ausgeübt. Werden beim Melken die vier an die Zitzen angesetzten Melkbecher jeweils zu zweit gegenphasig in bezug auf den Pulstakt betrieben, so führt dies dazu, daß sich jeweils zwei Melkbecher, die in die Saugphase geschaltet werden, leicht in Richtung der Zitze nach aufwärts bewegen, während sich die beiden anderen Melkbecher, die in die Entlastungsphase geschaltet werden, leicht in bezug auf die Längsrichtung der Zitze nach abwärts bewegen. Es kann somit beim Umschalten im Pulstakt eine leichte Schaukelbewegung am Euter erzeugt werden, was zu einer weiteren Entspannung, insbesondere Tonuslockerung, führt und zur Erhöhung des Gesamtgemelks beiträgt.

Der Zitzengummi kann insbesondere derart ausgebildet werden, daß der zwischen dem Übergang in den Halterand und dem versteiften Bereich des Kopfteils liegende Wandbereich als ein sich radial nach auswärts und aufwärts und gegen den versteiften Bereich hin sich stetig erweiternder Wandbereich ausgebildet ist.

Als besonders zweckmäßig hat sich auch eine Ausbildung erwiesen, bei der der zwischen dem Übergang in den Halterand und dem versteiften Bereich des Kopfteils liegende Wandbereich im wesentlichen radial nach auswärts erstreckt. Eine derartige Ausbildung kann gleichzeitig als ein Schutz gegen ein Durchschlagen des Halterandes in Höhe des oberen Randes der Melkbecherhülse verwandt werden.

Besonders zweckmäßig ist auch eine Ausgestaltung, bei der sich die Wandstärke des Saugstutzens vor dessen Übergang in den versteiften Bereich des Kopfteils vergrößert. Hierdurch wird erreicht, daß der versteifte Bereich des Kopfteils praktisch zusammen mit dem oberen Ende des Saugstutzens einen insgesamt in sich versteiften Bereich bilden, so daß sich in der Saugphase im wesentlichen nur der Wandbereich des Kopfteils, der zwischen dem versteiften Bereich und dem Übergang in den Halterand liegt, sich gegen das obere Ende des Saugstutzens hin bewegt.

Eine solche Versteifung des oberen Endes des Saugstutzens kann etwa dadurch erreicht werden, daß sich die Wandstärke des Saugstutzens zum Übergang in den versteiften Bereich des Kopfteils hin ständig vergrößert, oder aber auch daß das obere Ende des Saugstutzens über einen bestimmten Bereich eine gleichmäßige Versteifung aufweist.

Andererseits kann das Ziel, in der Saugphase eine Verkleinerung des zwischen dem oberen Ende des Saugstutzens einerseits und dem dem Halterand zugewandten unteren Wandabschnitt des Kopfteils liegenden Hohlraum zu verkleinern bzw. im Extremfall eine Anlage der den Hohlraum begrenzenden Wandteile zu erreichen, auf mehrere vorzugsweise Weisen erreicht werden. So kann etwa dieser untere Wandteil insgesamt aus einem elastischen Material von gegebenenfalls geringerer Wandstärke ausgebildet werden, so daß dieser Wandabschnitt etwa bei einer entsprechenden Druckkraft in Richtung der Wand zusammengedrückt werden kann bzw. die Wand sich nach einwärts gegen den Saugstutzen hin ausbauchen kann. Andererseits könnte dieser Wandabschnitt auch aus einem verhältnismäßig steifen Material hergestellt werden, wenn lediglich am Übergang dieses Wandabschnitts in den versteiften Bereich des Kopfes und/oder am Übergang dieses Wandabschnitts in den Halterand ein elastischer Bereich ausgebildet wird, der praktisch als eine Art bewegliches Scharnier zwischen den angrenzenden Hebelarmen wirken kann. Ein derartiger elastischer Bereich kann auch beispielsweise durch eine Einschnürung, d.h. eine Wanddickenverringerung, erreicht werden. Eine weitere mögliche Ausführungsform besteht darin, daß der Wandbereich als ein insgesamt elastischer Bereich und in Form eines Rollbalges, der nach außen gewölbt ist, ausgebildet wird. Ebenso ist eine Ausbildung der Wand dieses Teils des Kopfteils derart möglich, daß diese Wand in Form eines Federbalges ausgebildet ist. Hierbei kann der gesamte Wandbereich elastisch ausgebildet werden, es könnte aber auch eine Ausbildung derart vorgesehen werden, daß die einzelnen Balgbereiche verhältnismäßig steif ausgebildet sind und lediglich an ihren Verbindung- bzw. Umlenkbereichen elastisch miteinander verbunden sind.

Eine Versteifung des Kopfteils kann etwa durch eine Volumenvergrößerung in diesem Bereich oder auch dadurch erreicht werden, daß etwa ein Ring aus einem anderen steifen Material in diesem Bereich des Zitzengummis eingegossen wird. Eine andere Möglichkeit der Versteifung kann auch darin bestehen, daß in den Hohlraum zwischen dem oberen Ende des Saugstutzens und dem unteren Teil des Kopfteils ein Ring eingelegt wird, der gegen die Innenseite des Kopfteils in diesem Bereich anliegt und einer Verringerung des Außendurchmessers des Kopfteils in diesem Bereich entgegenwirkt. Eine Versteifung des Kopfteils kann auch durch eine entsprechende Formgebung, etwa derart erreicht werden, daß der Kopfteil in diesem Bereich in Form einer Zylinderwand mit konstantem Durchmesser ausgestaltet wird.

Um zu erreichen, daß nach einem Kollabieren des zwischen dem oberen Ende des Saugstutzens und dem unteren Wandbereich des Kopfteils liegenden Hohlraums die hierbei gegeneinander anliegenden Wandbereiche auch in der Entlastungsphase aneinanderliegend verhaftet bleiben, werden vorzugsweise auf einer oder gegebenenfalls beiden der einander gegenüberliegenden Flächen Rippen oder Ausnehmungen vorgesehen, über die das Vakuum zwischen den aneinanderliegenden Wänden in der Entlastungsphase wieder abgebaut werden kann.

Zur Verbesserung der Halterung des Zitzengummis an der Melkbecherhülse kann ein auf den oberen Rand der Melkbecherhülse aufsteckbarer Ring vorgesehen sein, der einen im wesentlichen in Längsrichtung der Melkbecher verlaufenden radial nach außen gegen die Außenwand der Melkbecherhülse versetzten Rand aufweist. Vorzugsweise wird in diesem Fall in dem Halterand des Zitzengummis eine ringförmige Ausnehmung vorgesehen, in die der Rand des Ringes einlegbar ist, so daß der Halterand des Zitzengummis den Rand innen und außen übergreift. Der Ring kann auch derart ausgebildet werden, daß er einen zweiten, sich im wesentlichen in Längsrichtung der Melkbecherhülse erstreckenden, radial nach einwärts gegen die Innenwand der Melkbecherhülse versetzten Rand aufweist. In diesem Falle kann der Zitzengummi vorzugsweise derart ausgebildet sein, daß in die zwischen dem ersten und dem zweiten Rand des Ringes gebildete ringförmige Ausnehmung ein ringförmiger Abschnitt des Halterandes des Zitzengummis in Eingriff gebracht wird. Ein Aneinanderhaften der obengenannten Wandteile des Zitzengummis beim Übergang von der Saugphase in die Entlastungsphase kann bei einer derartigen Ausführungsform sehr gut dadurch verhindert werden, daß auf der dem Saugstutzen zugewandten Innenwand des zweiten Randes im wesentlichen in axialer Richtung verlaufende Rippen bzw. Ausnehmungen vorgesehen werden.

Der Ring selbst kann aus einem Material gefertigt werden, das elastischer als das Material der Melkbecherhülse, jedoch härter als das Material des Zitzengummis ist.

Gemäß einer weiteren Ausführungsform der Erfindung kann auf der Außenseite des Saugstutzens ein den zweiten Rand des Rings übergreifender Festlegerand vorgesehen sein und es kann die Wand des zwischen dem versteiften Bereich des Kopfteils und dem Festlegerand liegenden Teils des Saugstutzens und die Wand des zwischen dem versteiften Bereich des Kopfteils und dem Übergang in den Halterand liegenden Teils des Kopfteils in Form eines Rollbalges und/oder Federbalges ausgebildet sein, wobei weiterhin eine Verbindung zwischen dem hierdurch begrenzten Hohlraum und dem zwischen der Außenseite des Saugstutzens und der Innenseite der Melkbecherhülse liegenden Pulsraum vorgesehen ist.

Im folgenden soll die Erfindung näher anhand von in den Zeichnungen dargestellten vorzugsweisen Ausführungsbeispielen erläutert werden. In der Zeichnung zeigen:
- Fig. 1: einen Längsschnitt durch ein gemäß der Erfindung ausgebildetes Zitzengummi, das in eine Melkbecherhülse eingesetzt und daran befestigt ist,
- Fig. 2: einen vergrößerten Ausschnitt aus dem in Fig. 1 gezeigten Längsschnitt der Fig. 1, wobei der Zustand in der Entlastungsphase dargestellt ist,
- Fig. 3: die gleiche Ansicht, wie in Fig. 2, bei der jedoch der Zustand in der Saugphase dargestellt ist,
- Fig. 4: eine ähnliche Ansicht wie in Fig. 2 einer anderen Ausführungsform eines gemäß der Erfindung ausgebildeten Zitzengummis,
- Fig. 5: eine ähnliche Ansicht wie in Fig. 2 einer weiteren Ausführungsform eines gemäß der Erfindung ausgebildeten Zitzengummis,
- Fig. 6: eine ähnliche Darstellung wie in Fig. 2 einer weiteren Ausföhrungsform eines gemäß der Erfindung ausgebildeten Zitzengummis,
- Fig. 7: eine ähnliche Darstellung wie in Fig. 2 einer weiteren Ausführungsform eines gemäß der Erfindung ausgebildeten Zitzengummis,
- Fig. 8: eine ähnliche Darstellung wie in Fig. 2 einer weiteren Ausführungsform eines gemäß der Erfindung ausgebildeten Zitzengummis, und
- Fig. 9: eine ähnliche Darstellung wie in Fig. 2 einer weiteren Ausführungsform eines gemäß der Erfindung ausgebildeten Zitzengummis.

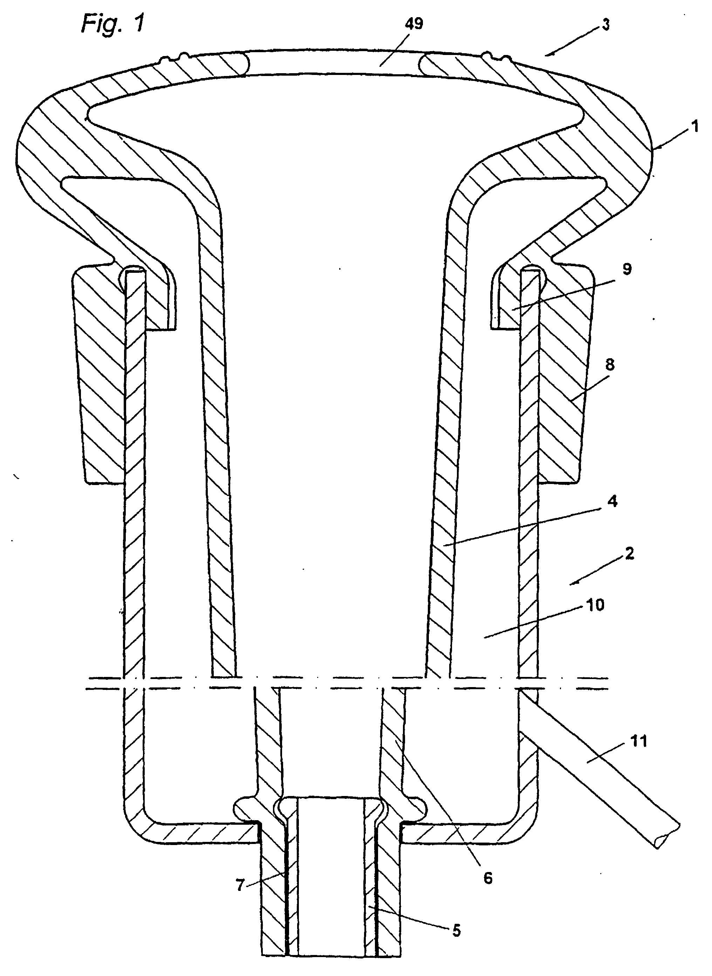

Fig. 1 zeigt einen gemäß der Erfindung ausgebildeten Zitzengummi 1, der mit einer Melkbecherhülse 2 zu einer sogenannten Melkbechereinheit zusammengebaut ist. Der Zitzengummi besteht im wesentliche aus einem oberen Kopfteil 3, einem Saugstutzen 4, der an seinem oberen Ende mit den Kopfteil verbunden ist und an seinem unteren Ende 6 mit Hilfe eines Anschlußstutzens 5 in einer unteren Öffnung 7 der Melkbecherhülse 2 eingeklemmt ist. Diese Halterung ist bekannt und üblich. Es sind auch etwa andere Halterungen bekannt, bei denen auf der Außenseite des Saugstutzens Wulste ausgeformt sind, in die sich der Öffnungsrand der Melkbecherhülse legt. Der Zitzengummi 1 umfaßt weiterhin einen Halterand 8, mit der er das obere Ende des Melkbechers 2 übergreift. Hierbei legt er sich gegen die Außenseite des Melkbechers an. Zur zusätzlichen Abstützung kann, wie in dem vorliegenden Beispiel gezeigt, auch ein Teil des Halterandes, der mit 9 bezeichnet ist, auf der Innenseite der Melkbecherhülse anliegen. Der Zitzengummi weist an seinem oberen Ende eine Öffnung 49 auf, durch die die Zitze des zu melkenden Tieres eingeführt wird. Zwischen der Innenseite der Melkbecherhülse 2 und der Außenseite des Saugstutzens 4 wird ein sogenannter Pulsraum 10 gebildet, der über einen Stutzen 11 mit einem an sich bekannten Pulsator in Verbindung steht, der während des Betriebs im Pulsraum 10 abwechselnd ein Vakuum und Atmosphärendruck erzeugt. Der Zitzengummi selbst ist üblicherweise rotationssymmetrisch zu seiner Längsachse ausgebildet. Es sind aber auch dreiecksförmige, vierecksförmige, elliptischförmige oder gerippte Querschnitte des Saugstutzens bekannt.

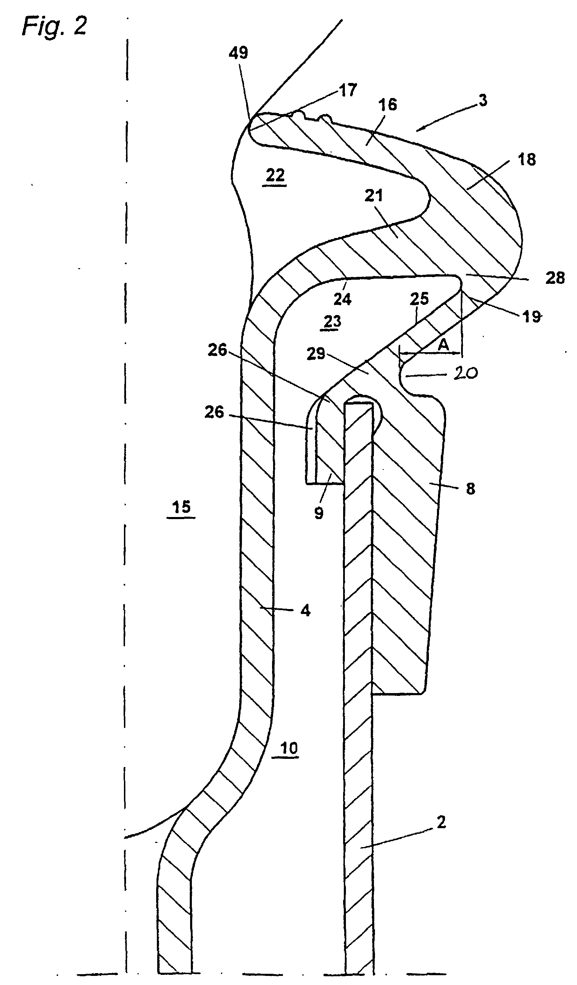

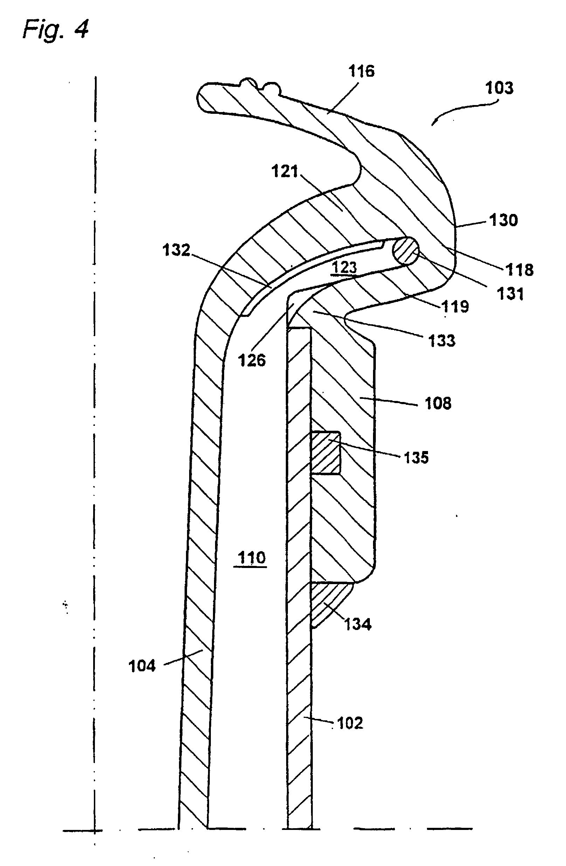

Fig. 2 zeigt in vergrößertem Maßstab den in Fig. 1 im rechten oberen Teil gezeigten Teil des Zitzengummis mit dem oberen Teil der Melkbecherhülse. Zusätzlich ist schematisch eine Zitze 15 dargestellt, die von oben durch die Öffnung 49 in das Innere des Kopfteils 3 sowie das Innere des Saugstutzens eingeführt ist. Die Außenseite des Kopfteils läßt sich in etwa vergleichen mit der Form eines Torus, obgleich diese Form nicht zwingend ist, wie eingehend auch aus den in den Fig. 4 bis 6 dargestellten Ausführungsformen hervorgeht. Der Kopf umfaßt im wesentlichen einen oberen Lippenabschnitt 16, der eine Dichtlippe 17 bildet, die die Öffnung 49 umschließt und gegen den oberen Teil der Zitze 15 anliegt. Die Dichtlippe 16 geht an der Stelle des größten Durchmessers der Außenseite des Kopfteils 3 in einen versteiften Bereich 18 über. Die Versteifung wird im vorliegenden Beispiel dadurch erreicht, daß die Dicke der Wandung wesentlich stärker in diesem Bereich ausgebildet ist. An den versteiften Bereich 18 schließt sich nach unten ein weiterer Bereich 19 an, auf den im einzelnen weiter unten noch eingegangen wird. Der Bereich 19 geht etwa im Bereich der Einschnürung 20 in den Halterand 8 und 9 über. Der Saugstutzen 4 mündet an seinem oberen Ende 21 in den versteiften Abschnitt 18 des Zitzengummikopfes 3. Vor der Einmündung in den versteiften Teil des Zitzengummis nimmt vorzugsweise die Wandstärke des oberen Endes 21 des Saugstutzens selbst zu, wodurch auch das obere Ende des Saugstutzens gegenüber dem unteren Teil des Saugstutzens, der normalerweise eine gleichmäßige Dicke aufweist, eine gewisse Versteifung aufweist. Der Saugstutzen 4 liegt im Bereich seiner gleichmäßigen Wandstärke gegen den unteren Umfang der Zitze 15 an.

In dem Kopfteil 3 sind im wesentlichen zwei Hohlräume gebildet, und zwar ein erster Hohlraum 22 zwischen der Innenseite der Dichtlippe 16 und der Innenseite des oberen Endes des Saugstutzens 4. Ein zweiter Hohlraum 23 ist Teil des Pulsraumes 10 und bildet das obere Ende dieses Pulsraumes, der durch einerseits die Außenseite 24 des oberen Endes des Saugstutzens 4 und andererseits die Innenseite 25 des unteren Teils 19 des Kopfteils begrenzt wird.

An dem innenliegenden Teil 9 des Halterandes sind auf der der Außenseite des Saugstutzens 4 zugewandten Seite in axialer Richtung verlaufende Rippen 26 ausgebildet, die bei einem Anliegen der Außenseite des Saugstutzens 4 an der Innenseite des Teils 9 des Halterandes den Durchtritt von Luft in den Raum 23 ermöglichen sollen. Anstelle der genannten Rippen 26 können auch in axialer Richtung verlaufende Nuten vorgesehen sein, die den gleichen Zweck erfüllen. Die Rippen bzw. Nuten müssen nicht exakt axial verlaufen, wenn sie lediglich den Zweck erfüllen, daß ein Druckausgleich, zum Beispiel durch Einleiten von Gas, zwischen dem unteren Pulsraum 10 sowie dem Raum 23 erfolgen kann, wenn sich im Betrieb unter Vakuum die Außenseite des Saugstutzens gegen die Innenseite des Halterandes 9 legen sollte.

Der untere Abschnitt 19 des Kopfteils 3, der etwa zwischen dem unteren Ende 28 der Versteifung 18 und dem Übergang 29 in den Halterand liegt, wird bei dem vorliegenden Ausführungsbeispiel in Form eines elastisch verformbaren Abschnittes ausgebildet. Dies kann etwa dadurch erreicht werden, daß die Dicke der Wand des Abschnitts 19 entsprechend dünn, insbesondere gegenüber den versteiften Teilen 18 und 21, ausgebildet wird,

Es wurde festgestellt, daß der Einfaltdruck eines Saugstutzens neben der Wahl des Materials und der Stärke der Wandung auch von der Konizität des Saugstutzens in seinem oberen Bereich, wie auch von der Vorspannung abhängt, mit der der Saugstutzen nach dem Einspannen an seinem unteren Ende gehalten wird.

Die Funktionsweise des Zitzengummis ist etwa wie folgt:

Während des Melkvorganges, bei dem im Inneren des Saugstutzens und damit unterhalb dem unteren Ende der Zitze 15 ein Melkvakuum anliegt, steht auch der Raum 22 im oberen Teil des Kopfteils annähernd unter Vakuum. Dieser Druck im Raum 22 ändert sich während des Melkvorganges praktisch nicht.

Üblicherweise wird beim neueren Melken mit einem Pulsbetrieb gearbeitet. D.h. in einer sogenannten Saugphase, in der Milch aus der Zitze 15 durch das unterhalb der Zitze anliegende Vakuum abgesaugt wird, befindet sich der Pulsraum 10 ebenfalls über die Leitung 11 unter einem entsprechenden Vakuum. Hierdurch nimmt der Saugstutzen die in Fig. 1 gezeigte zylindrische Form an. In der darauffolgenden Entlastungsphase wird, während im Inneren des Saugstutzens weiterhin ein Vakuum aufrechterhalten wird, in dem Pulsraum 10 der Druck erhöht und zwar meistens auf Atmosphärendruck. Hierdurch wird der Saugstutzen aufgrund der auf beiden Seiten des Saugstutzens wirkenden unterschiedlichen Drucke unterhalb der Zitze flach zusammengedrückt, so daß keine weitere Milch aus der Zitze abgesogen werden kann. Gleichzeitig wird hierdurch die Zitzenspitze massiert.

In Fig. 2 ist zunächst der Zustand der Entlastungsphase dargestellt. Bei diesem Zustand herrscht im Pulsraum 10 und damit auch im Raum 23 Atmosphärendruck. D.h. der Druck auf den einander gegenüberliegenden Seiten des Wandabschnittes 19 ist gleich groß. Andererseits liegt auf den einander gegenüberliegenden Seiten des oberen Endes 21 des Saugstutzens im Raum 22 einerseits etwa Vakuum und im Raum 23 Atmosphärendruck an. Hierdurch wirkt eine Kraft, die jedoch aufgrund der Versteifung 21 des oberen Endes des Saugstutzens praktisch nicht zu einer Formveränderung dieses Teils des Saugstutzens führt, zumal das anschließende Ende des Saugstutzens reibend gegen die Außenseite der Zitze anliegt. D.h. auf die Zitze wird lediglich ein leichter Zug nach aufwärts ausgeübt.

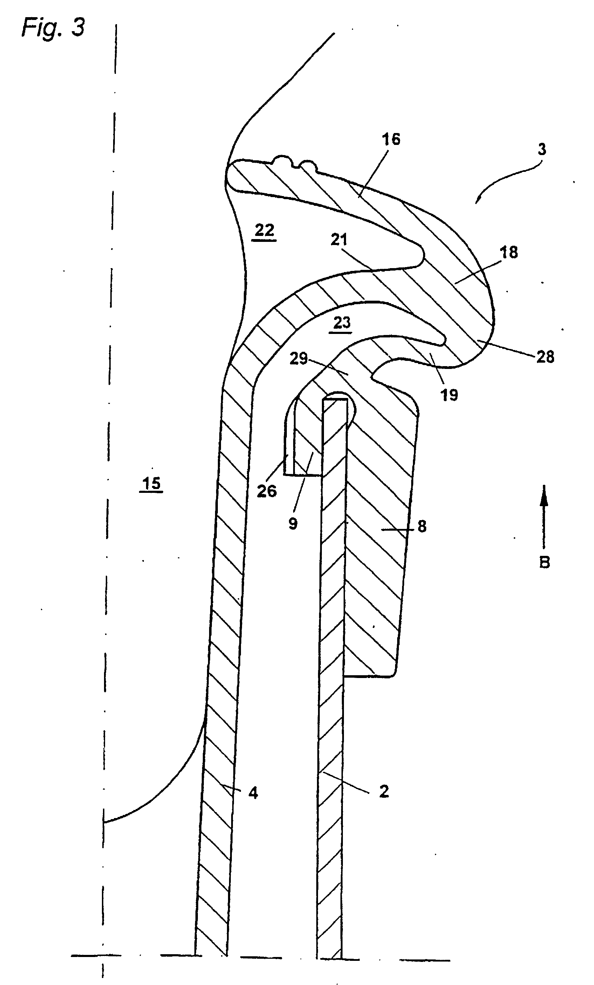

In der Saugphase wird im Pulsraum 10 und damit auch im Raum 23 ein Unterdruck erzeugt, während auf der Außenseite des Zitzengummis Atmosphärendruck herrscht. Unter diesen Bedingungen liegt an dem unteren Wandabschnitt 19 in dem ringförmigen Bereich A auf der Außenseite ein Atmosphärendruck und auf der Innenseite Vakuum an. Hierdurch wird dieser Abschnitt, wie in Fig. 3 gezeigt, nach aufwärts verformt. D.h. die Innenseite des Wandabschnitts 19 hat das Bestreben, sich gegen die Außenseite des oberen versteiften Endes 21 des Saugstutzens zu legen. Hierdurch wird das Volumen des Hohlraums 23 wesentlich verringert. Durch diesen Vorgang wird auf die Melkbecherhülse eine Kraft in Richtung des Pfeils B, d.h. eine aufwärts gerichtete Kraft ausgeübt, die die Melkbecherhülse mit dem anliegenden Halterand 8 und 9 leicht gegenüber dem Saugstutzen 4 anhebt. Auf den Saugstutzen wird andererseits eine entsprechende nach abwärts gerichtete Gegenkraft ausgeübt. Da der Saugstutzen an der Außenseite des unteren Teils der Zitze 15 anliegt, wird diese Kraft auf die Zitze übertragen. D.h. insgesamt wird auf die Zitze eine nach abwärts gerichtete Kraft ausgeübt.

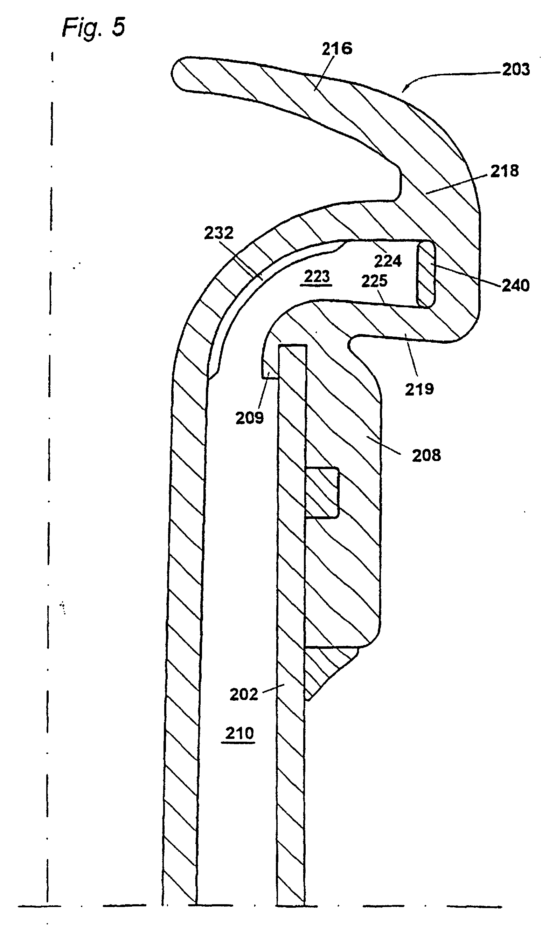

Fig. 4 zeigt eine ähnliche Ausführungsform eines Zitzengummis wie in den Fig. 1 bis 3. Gleiche Teile wurden deshalb mit den gleichen, um 100 erhöhten Bezugszeichen bezeichnet. Der Kopfteil 103 ist bei dieser Ausführungsform nicht einem Torus entsprechend ausgebildet, sondern weist in Höhe seines maximalen Außendurchmessers einen praktisch in axialer Richtung zylindrischen Abschnitt 130 mit konstantem Außendurchmesser auf. Der untere Abschnitt des Kopfteils 119 ist nicht, wie bei der in Fig. 2 gezeigten Ausführungsform, bei der sich der Zitzengummi im entspannten Zustand befindet, unter einem Winkel gegen die Horizontale, der zwischen etwa 20 und 45° liegt, ausgebildet, sondern bei dieser Anordnung ist der Winkel zwischen der Horizontalen und der Ausrichtung des Wandteils 119 verhältnismäßig klein, d.h. er liegt im Bereich von 5 bis 10°. Es ist jedoch zu erwähnen, daß der Winkel gegen die Horizontale auch bis auf Null abnehmen und darüber hinaus auch Winkel unter 0° annehmen kann. Eine solche Winkellage ist bei entsprechender Ausgestaltung des Zitzengummis möglich, wie aus der später zu erläuternden Fig. 5 zu ersehen ist.

Bei dieser Anordnung ist in den Hohlraum 123 ein im Querschnitt kreisförmiger Ring 131 derart eingelegt, daß er gegen die Innenseite des Bereichs (118) des Kopfteils anliegt. Durch diesen Ring kann eine wesentliche zusätzliche Versteifung des Bereichs 118 erreicht werden, ohne daß es hierzu einer wesentlichen Verdickung aufgrund zusätzlichen Zitzengummimaterials bedürfte. Auf diese Weise kann der Außendurchmessers des Zitzengummikopfes kleiner gehalten werden als etwa bei der in den Fig. 2 und 3 dargestellten Ausführungsform.

Neben den in Fig. 4 gezeigten Rippen 126 können zusätzlich oder an deren Stelle auch Rippen oder Ausnehmungen 132 auf der Außenseite des oberen Endes des Saugstutzens vorgesehen sein.

Gegenüber der in Fig. 2 gezeigten Ausführungsform ist der innenliegende Teil 9 des Halterandes weggelassen. Der Zitzengummi stützt sich nunmehr lediglich noch mit Hilfe eine Nase 133 auf dem oberen Rand der Melkbecherhülse 102 auf. Dadurch wird die Möglichkeit eröffnet, den Durchmesser des Melkbechers möglichst klein und damit vom Gewicht her gering zu halten. Um den Zitzengummi dennoch sicher auf der Melkbecherhülse zu halten, kann entweder ein auf der Außenseite der Melkbecherhülse angebrachter Abstützring 134 vorgesehen sein, auf der sich das untere Ende des Halterandes 108 abstützt, oder es könnte ein anderer Haltering 135 auf dem äußeren Umfang der Melkbecherhülse vorgesehen sein, der sich in eine entsprechende Ausnehmung auf der Innenseite des Halterandes 108 einlegt. Auf diese Weise wird ein fester Sitz des Zitzengummis ermöglicht.

Die Wirkungsweise des in Fig. 4 gezeigten Zitzengummis ist ähnlich wie bei der in den Fig. 2 und 3 gezeigten Ausführungsform.

In Fig. 5 ist ein ähnliches Zitzengummi wie in den Fig. 2 bzw. 4 dargestellt, weshalb gleiche Teile mit einem um 200 erhöhten Bezugszeichen bezeichnet sind. Der Unterschied dieses Zitzengummis gegenüber der in Fig. 4 gezeigten Ausführungsform besteht im wesentlichen darin, daß in den Hohlraum 223 ein Verstärkungsring in Form eines Rundbandes 240 eingelegt ist. Hierdurch wird der Abstand zwischen der äußeren Wand 224 des oberen Endes des Saugstutzens einerseits und der Innenwand 225 des unteren Abschnitts 219 des Kopfteils vergrößert. Auf diese Weise wird es möglich, den Wandabschnitt 219 des unteren Teils des Kopfteils derart zu gestalten, daß diese Wand sich im wesentlichen radial erstreckt. Die anhand der Fig. 2 und 3 erläuterte Funktionsweise wird hierdurch nicht verändert. Diese Ausführungsform bringt jedoch den wesentlichen zusätzlichen Vorteil, daß Schläge beim unbeabsichtigten Auftreffen des Zitzengummiskopfes auf einen Widerstand nicht mehr auf den über dem oberen Ende der Melkbecherhülse liegenden Halterand auftreffen können und zu einen Durchschlagen dieses Halterandes führen, sondem, daß derartige Schläge bereits durch den gesamten Kopfteil aufgefangen und abgefedert werden. - Bei einer entsprechenden andersartigen Versteifung des Bereiches 218 kann das Rundband 240 auch weggelassen werden.

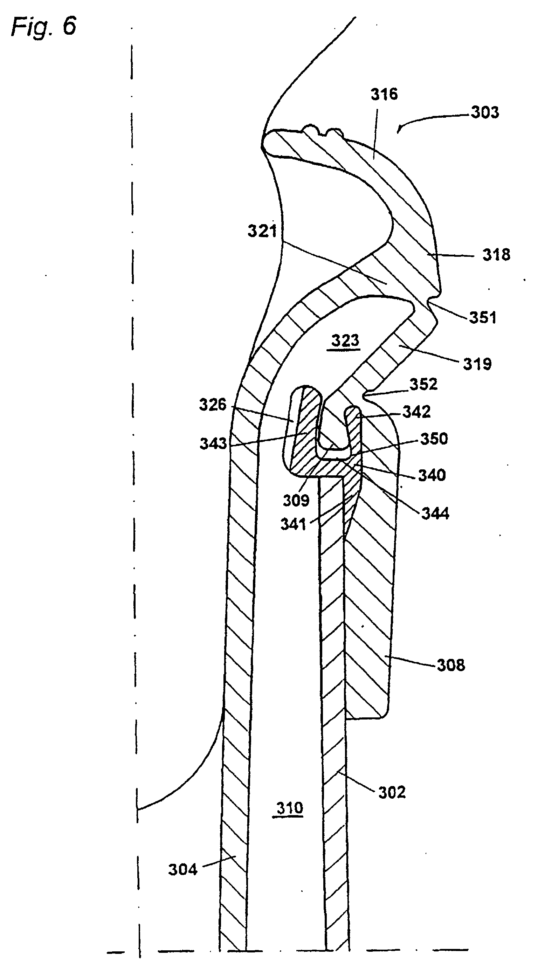

Fig. 6 zeigt nochmals eine weitere Ausführungsform eines Zitzengummis, die im wesentlichen dem in Fig. 2 gezeigten Zitzengummi entspricht, weshalb gleiche Teile mit einer um 300 erhöhten Bezugsziffer bezeichnet sind. Bei dieser Ausführungsform ist auf den oberen Rand der Melkbecherhülse ein zusätzlicher Ring 340 aufgesteckt. Dieser Ring weist einen auf der Außenseite der Melkbecherhülse anliegenden Halterand 341 auf. Weiterhin weist der Ring einen ersten in axialer Richtung über das obere Ende der Melkbecherhülse hinaus vorstehenden Rand 342 auf, der gegenüber der Außenwand der Melkbecherhülse radial nach außen versetzt ist. Ein zweiter Rand 343 erstreckt sich ebenfalls in radialer Richtung und ist gegenüber der Melkbecherhülse 302 nach einwärts radial versetzt angeordnet. Der Halterand 308 des Zitzengummis übergreift den ersten Rand 342 und den Halterand 341 des Ringes 340 und erstreckt sich noch über einen gewissen Teil des oberen Endes der Melkbecherhülse 302 und liegt gegen deren Außenwand an. Der innenliegende Halterand 309 des Zitzengummis ragt in den ringförmigen Spalt 344, der zwischen dem ersten und dem zweiten Rand gebildet wird und liegt gegen die Innenseite des ersten Randes 342 an. Auf der innenliegenden Oberfläche des zweiten Randes 343 sind in axialer Richtung verlaufende Rippen oder Nuten 326 ausgebildet, die dem bereits oben erwähnten Zweck eines Druckausgleichs in dem Hohlraum 323 in der Entlastungsphase dienen.

Der Ring 340 und insbesondere der erste Rand 342 können aus einem etwas steiferen, d.h. weniger elastischen Material ausgebildet sein als der Zitzengummi, jedoch aus einem weichen und elastischeren Material als die Melkbecherhülse 302. Auf diese Weise kann dieser Ring 340 und insbesondere der erste Rand 342 irgendwelche Schläge abfedern, die auf den Halterand des Zitzengummis in Richtung des Ringes auftreffen. Die Abfederungswirkung des ersten Randes 342 könnte noch dadurch erhöht werden, daß der Rand an seiner unteren Basis, d.h. bei etwa 350 verjüngt ausgebildet ist, wodurch seine Elastizität erhöht wird.

Der untere Wandabschnitt 319 des Kopfteils 303 kann auch dann seine Funktion erfüllen, wenn er selbst nicht besonders elastisch, sondern gegebenenfalls steif ausgebildet ist. In diesem Falle sollte am Übergang von dem steifen Bereich 318 zu dem Wandteil 319 eine den Wandteil beweglich gestaltende Einschnürung 351 und/oder eine entsprechende Einschnürung 352 am Übergang zwischen dem Wandbereich 319 in den Halterand 308 vorgesehen sein. Diese Einschnürungen können sodann derart elastisch sein, daß sich die Wandteile 318 und 319 bzw. die Wandteile 319 und der Halterand 308 wie Schamiergelenke gegeneinander bewegen können. Auf diese Weise wird eine gleiche Funktionsweise, wie sie anhand der Fig. 2 und 3 erläutert wurde, erreicht.

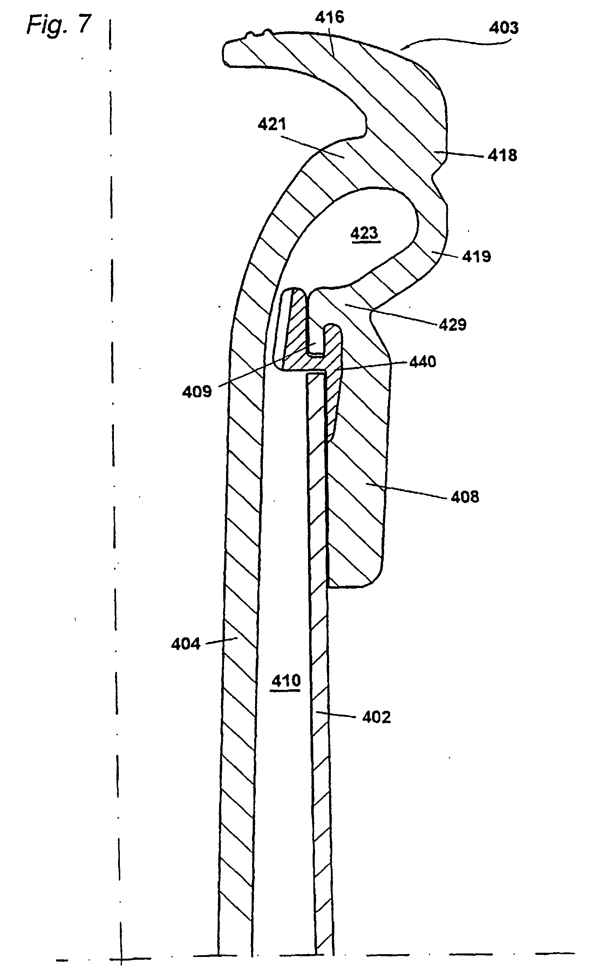

In Fig. 7 ist eine weitere Ausführungsform eines erfindungsgemäßen Zitzengummis dargestellt, wobei gleiche Teile wie in den vorhergehenden Figuren mit den gleichen, jedoch um 400 erhöhten Bezugszeichen bezeichnet sind. Auf diese bereits beschriebenen Teile soll hier nicht weiter eingegangen werden. Die in Fig. 7 gezeigte Ausführungsform unterscheidet sich von den vorhergehenden dadurch, daß der zwischen dem versteiften Bereich 418 und dem Übergangsbereich 429 in den Halterand 408 liegende Teil 419 des Kopfteils in Form eines Rollbalges ausgebildet ist. Diese Ausgestaltung kann, wie gezeigt, in Form einer nach außen gewölbten Wandung ausgestaltet sein, die wenigstens zum Teil oder auch vollständig aus einem elastischen Wandteil besteht.

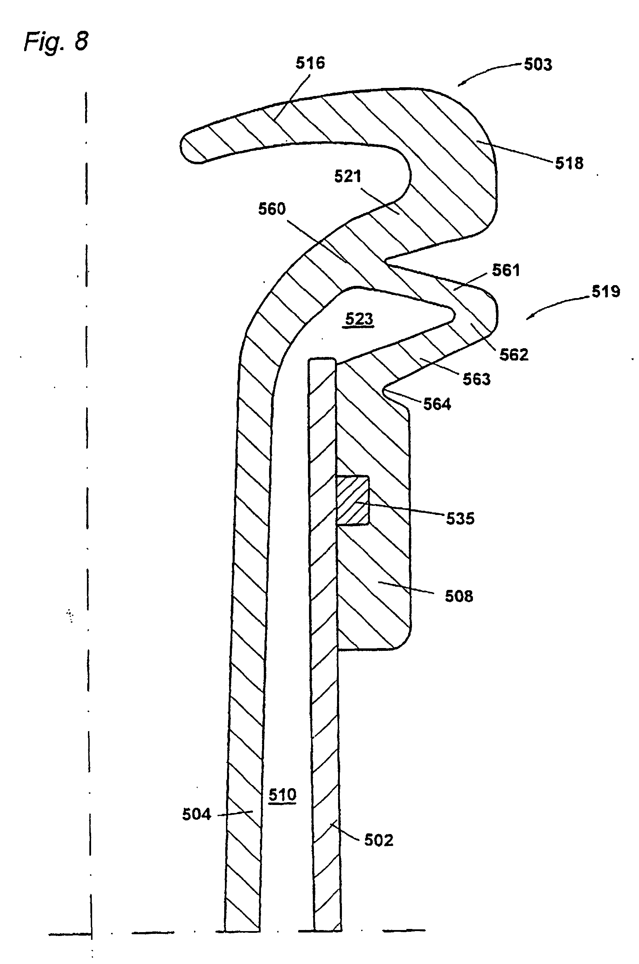

Fig. 8 zeigt eine weitere Ausgestaltung eines erfindungsgemäßen Zitzengummis, bei der gleiche Teile mit desselben, jedoch um 500 erhöhten Bezugszeichen bezeichnet sind. Auf diese bereits früher erwähnten Teile soll hier deshalb nicht näher eingegangen werden. Bei dieser Ausführungsform ist der zwischen dem versteiften Bereich 518 und dem Übergang 564 in den Halterand 508 liegende Teil des Kopfteils 519 in Form eines Federbalges ausgebildet, der aus den beiden Balgbereichen bzw. Balgschenkeln 561 und 563 besteht. Das obere Ende 560 des Federbalges geht unmittelbar in den in diesem Bereich bereits versteiften Teil 521 des Saugstutzens 504 über. Der untere Teil des Federbalges geht an dem Übergang 564 in den Halterand 508 über. Die beiden Schenkel 561 und 563 sind bei diesem Ausführungsbeispiel durch einen nach auswärts gebogenen Verbindungsbereich 562 miteinander verbunden. Bei dieser Ausführungsform kann der gesamte Wandbereich gleichmäßig oder unterschiedlich elastisch ausgebildet sein. Es besteht jedoch auch die Möglichkeit, die Schenkel 561 und 563 verhältnismäßig steif auszubilden, und lediglich den Verbindungsbereich 562 elastisch auszubilden, oder zusätzlich einen oder beide der Verbindungsbereiche 560 und 564. Die Wirkungsweise dieses Zitzengummis ist die gleiche, wie bei den vorher beschriebenen Zitzengummis.

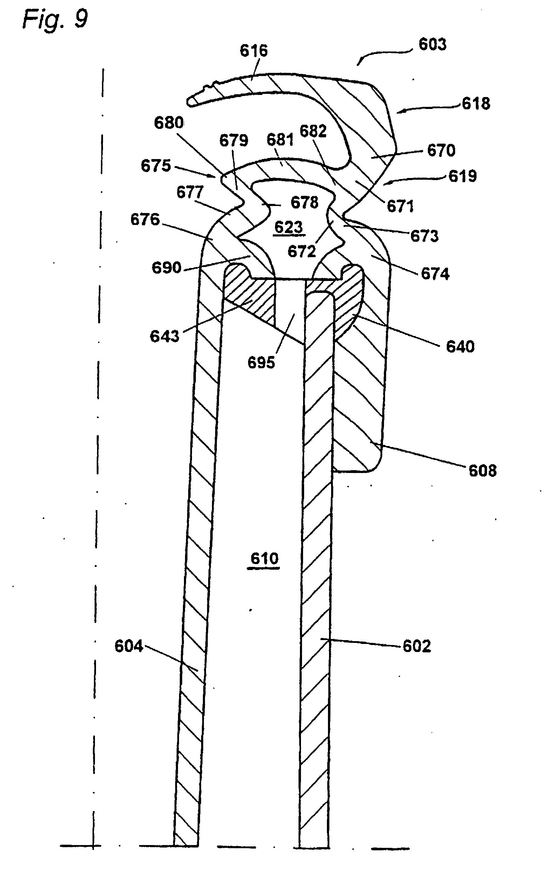

Die in den in Fig. 9 dargestellten Teile des Zitzengummis, die in gleicher Weise wie bei den vorhergehenden Ausführungsformen ausgebildet sind, sind mit gleichen, jedoch um 600 erhöhten Bezugszeichen bezeichnet und auf diese Teile soll deshalb im einzelnen nicht mehr eingegangen werden. Bei dieser Ausführungsform ist der versteifte Bereich 618 des Kopfteils 603 durch einen Teil 619, der in ähnlicher Weise, wie in Fig. 8 gezeigt, in Form eines Federbalges ausgebildet ist, mit dem Halterand 608 verbunden. Bei dieser Ausgestaltung weist der Federbalg jedoch Schenkel 671 und 673 auf, die durch einen elastischen Bereich 672 miteinander verbunden sind, wobei dieser elastische Bereich im Gegensatz zu der Darstellung in Fig. 8 nach einwärts gewandt dargestellt ist. Dieser Federbalg geht an seinem oberen Ende im Punkte 670 in den verstelften Bereich 618 und an seinem unteren Ende in dem Punkt 674 in den Halterand 608 über. Die Ausbildung dieses Federbalges sowohl von der Form wie von der Wahl des Materials in bezug auf die Elastizität her kann in gleicher Weise, wie bei dem in Fig. 8 beschriebenen Federbalg erfolgen.

Bei dem in Fig. 9 dargestellten Ausführungsbeispiel weist der Saugstutzen 604 auf seiner Außenseite einen ringförmigen Ansatz 690 auf, der einen Festlegerand bildet, der den zweiten Rand 643 des Rings 640 übergreift, und damit den Saugstutzen in Höhe des zweiten Randes an diesem festlegt. Das der Einführöffnung für die Zitze zugewandte Ende des Saugstutzens, d.h. das zwischen diesem Festlegerand 690 und dem versteiften Bereich 618 liegende Teil des Saugstutzens, ist ebenfalls in Form eines Federbalges 675 ausgebildet. Dieser Federbalg weist sozusagen drei Schenkel 677, 679 und 681 auf, die durch die Übergangs- bzw. Gelenkpunkte 678 und 680 miteinander verbunden sind. Der Federbalg geht praktisch im Bereich 676 in den unteren Teil des Saugstutzens und im Bereich 682 in den versteiften Bereich des Kopfteils über. Auch bei diesem Federbalg kann der gesamte Wandbereich elastisch ausgebildet werden, es können jedoch auch alle oder einzelne der Schenkel versteift ausgebildet sein, während die die Schenkel verbindenden Verbindungs- bzw. Übergangsbereiche sodann elastisch ausgebildet sein sollten.

Die beiden Federbälge 619 und 675 begrenzen den Hohlraum 623. Dieser Hohlraum ist über eine Durchgangsöffnung 695, die etwa in Form einer axial verlaufenden Bohrung durch den Ring 640 ausgebildet ist, mit dem übrigen Pulsraum 610 verbunden.

Die Wirkungsweise dieses Zitzengummis ist derart, daß ausgehend von der dargestellten Stellung des Zitzengummis, die die Entlastungsphase zeigt, in der der Pulsraum 610 unter Atmosphärendruck steht, bei der Erzeugung eines Unterdrucks im Pulsraum während der Saugphase die beiden Federgelenke 619, 675 sich jeweils in axialer Richtung zusammenziehen, so daß der Hohlraum 623 verkleinert wird. Auf diese Weise wird ebenfalls eine periodische auf- und abgerichtete Kraft in Längsrichtung auf die Außenseite der Zitze ausgeübt.

## Patentansprüche

1. Zitzengummi mit einem zu einer Längsachse im wesentlichen rotationssymmetrischen Kopfteil (3) mit einer Einführöffnung (49) für die Zitze, einem Halterand (8, 9) zum Übergreifen einer Melkbecherhülse (2), sowie einem mit dem Kopfteil (3) verbundenen Saugstutzen, wobei der Kopfteil (3) an seinem der Einführöffnung (49) für die Zitze gegenüberliegenden Ende in den Halterand übergeht, **dadurch gekennzeichnet, daß** die Wand des Kopfteils (3) in einem zwischen der Einführöffnung (49) für die Zitze und dem Übergang in den Halterand (8) liegenden Bereich (18) versteift ausgebildet ist, daß das der Einführöffnung (49) für die Zitze zugewandte Ende des Saugstutzens (4) in Höhe des versteiften Bereiches (18) in den Kopfteil (3) übergeht, daß wenigstens ein Teilbereich des zwischen dem versteiften Bereich (18) und dem Übergang in den Halterand (8, 9) liegenden Wandbereiches (19) des Kopfteils (3) in bezug auf den versteiften Bereich (18) elastisch verformbar ausgebildet ist, und daß dieser Wandbereich (19) des Kopfteils (3) zusammen mit dem der Einführöffnung für die Zitze zugewandten Ende des Saugstutzens (4) einen Hohlraum (23) zwischen sich begrenzen.

2. Zitzengummi nach Anspruch 1, **dadurch gekennzeichnet, daß** der Halterand (8, 9) des Zitzengummis im montierten Zustand auf der Melkbecherhülse etwa in Höhe des oberen Randes der Melkbecherhülse beginnt und sich über einen Teil der Länge der Außenseite der Melkbecherhülse (2) erstreckt.

3. Zitzengummi nach Anspruch 1 oder 2, **dadurch gekennzeichnet, daß** der zwischen dem Übergang in den Halterand (8, 9) und dem versteiften Bereich (18) des Kopfteils liegende Wandbereich (19) als ein sich radial nach auswärts und aufwärts gegen den versteiften Bereich hin stetig erweiternder Wandbereich (19) ausgebildet ist.

4. Zitzengummi nach Anspruch 1 oder 2, **dadurch gekennzeichnet, daß** der zwischen dem Übergang in den Halterand (208, 209) und dem versteiften Bereich (218) des Kopfteils (203) liegende Wandbereich (219) sich im wesentlichen radial nach auswärts erstreckt.

5. Zitzengummi nach einem der Ansprüche 1 bis 4, **dadurch gekennzeichnet, daß** sich die Wandstärke des Saugstutzens (4) vor dessen Übergang in den versteiften Bereich (18) des Kopfteils (3) vergrößert.

6. Zitzengummi nach Anspruch 5, **dadurch gekennzeichnet, daß** sich die Wandstärke zunehmend vergrößert.

7. Zitzengummi nach einem der Ansprüche 1 bis 6, **dadurch gekennzeichnet, daß** eine Vergrößerung der Wandstärke des Saugstutzens (4) des etwa im Bereich zwischen dem der Innenwand der Melkbecherhülse (2) entsprechenden Radius und dem Übergang in den versteiften Teil (18) des Kopfteils (3) liegenden Teils des Saugstutzens vorgesehen ist.

8. Zitzengummi nach einem der Ansprüche 1 bis 7, **dadurch gekennzeichnet, daß** am Übergang des der Einführöffnung (49) für die Zitze abgewandten Endes des Kopfteils (303) in den Halterand (308, 309) eine eine elastische Verformung in Form eines Biegegelenks gewährleistende Einschnürung (352) vorgesehen ist.

9. Zitzengummi nach einem der Ansprüche 1 bis 8, **dadurch gekennzeichnet, daß** am Übergang des versteiften Teils (318) des Kopfteils (303) in den dem Halterand zugewandten Teil (319) des Kopfteils (303) eine eine elastische Verformung in Form eines Biegegelenks gewährleistende Einschnürung (351) vorgesehen ist.

10. Zitzengummi nach einem der Ansprüche 1 bis 9, **dadurch gekennzeichnet, daß** die Versteifung im Bereich des Kopfteils durch eine Vergrößerung der Wandstärke des Kopfteils bewirkt ist.

11. Zitzengummi nach einem der Ansprüche 1 bis 10, **dadurch gekennzeichnet, daß** die Versteifung im Bereich des größten Außendurchmessers des Kopfteils vorgesehen ist.

12. Zitzengummi nach einem der Ansprüche 1 bis 11, **dadurch gekennzeichnet, daß** zur Versteifung des Kopfteils (3) ein um den Kopfteil umlaufender Ring in die Wand eingegossen ist.

13. Zitzengummi nach Anspruch 1, **dadurch gekennzeichnet, daß** zur Versteifung des Kopfteils ein gegen die Innenseite des Kopfteils anliegender Ring (131, 240) in den Hohlraum (123, 223) eingelegt ist.

14. Zitzengummi nach einem der Ansprüche 1 bis 13, **dadurch gekennzeichnet, daß** der versteifte Bereich (118) durch einen zylindrischen Wandbereich mit konstantem Außendurchmesser gebildet ist.

15. Zitzengummi nach einem der Ansprüche 1 bis 14, **dadurch gekennzeichnet, daß** der zwischen dem versteiften Bereich (418) und dem Übergang in den Halterand (408) liegende Teil (419) des Kopfteils in Form eines nach außen gewölbten Rollbalgs ausgebildet ist.

16. Zitzengummi nach einem der Ansprüche 1 bis 14, **dadurch gekennzeichnet, daß** der zwischen dem versteiften Bereich (518) und dem Übergang in den Halterand (508) liegende Teil (519) des Kopfteils (503) in Form eines Federbalgs ausgebildet ist.

17. Zitzengummi nach einem der Ansprüche 1 bis 16, **dadurch gekennzeichnet, daß** der zwischen dem versteiften Bereich (518) und dem Übergang in den Halterand (508) liegende Teil (519) des Kopfteils an seinem dem versteiften Bereich zugewandten Ende in das der Einführöffnung für die Zitze zugewandte versteifte Ende (521) des Saugstutzens (504) übergeht.

18. Zitzengummi nach einem der Ansprüche 1 bis 17, **dadurch gekennzeichnet, daß** auf wenigstens einer der einander zugewandten Flächen (24, 25) des Saugstutzens (4) bzw. der Innenseite des Kopfteils (3, 19) oder der auf der Innenseite der Melkbecherhülse (2) zur Halterung anliegenden Teile (9) des Halterandes im wesentlichen in Längsrichtung verlaufende Rippen (26) und/oder Einschnitte ausgebildet sind.

19. Zitzengummi nach einem der Ansprüche 1 bis 18, **dadurch gekennzeichnet, daß** auf der Innenseite des Halterandes (108) Ausnehmungen zum Übergreifen von auf der Außenseite der Melkbecherhülse (102)ausgebildeten Vorsprüngen (135) vorgesehen sind.

20. Zitzengummi nach einem der Ansprüche 1 bis 19, **dadurch gekennzeichnet, daß** ein auf den dem Kopfteil (303) des Zitzengummis zugewandten Rand der Melkbecherhülse aufsteckbarer Ring (340) vorgesehen ist, der einen im wesentlichen in Längsrichtung der Melkbecherhülse vertaufenden radial nach außen gegen die Außenwand der Melkbecherhülse versetzten Rand (342) aufweist.

21. Zitzengummi nach Anspruch 20, **dadurch gekennzeichnet, daß** in dem Halterand des Zitzengummis eine ringförmige Ausnehmung ausgebildet ist, in die der Rand (342) des Rings (340) einlegbar ist, so daß der Halterand des Zitzengummis den Rand innen und außen übergreift.

22. Zitzengummi nach Anspruch 20 oder 21, **dadurch gekennzeichnet, daß** der Ring (340) einen zweiten (343), sich im wesentlichen in Längsrichtung der Melkbecherhülse erstreckenden, radial nach einwärts gegen den Saugstutzen (3) versetzten Rand (343) aufweist.

23. Zitzengummi nach Anspruch 22, **dadurch gekennzeichnet, daß** zwischen dem ersten und dem zweiten Rand (342, 343) des Ringes (340) eine ringförmige Ausnehmung (344) gebildet ist, mit der ein ringförmiger Abschnitt (309) des Halterandes des Zitzengummis in Eingriff bringbar ist.

24. Zitzengummi nach Anspruch 22 oder 23, **dadurch gekennzeichnet, daß** auf der nach radial einwärts gewandten Fläche des zweiten Randes (343) des Ringes (340) im wesentlichen in Längsrichtung verlaufende Rippen (326) oder Ausnehmungen vorgesehen sind.

25. Zitzengummi nach Anspruch 22, **dadurch gekennzeichnet, daß** auf der Außenseite des Saugstutzens (604) ein den zweiten Rand (643) des Rings (640) übergreifender Festlegerand (690) vorgesehen ist, daß die Wand des zwischen dem versteiften Bereich (618) des Kopfteils (603) und dem Festlegerand (690) liegenden Teils des Saugstutzens (604) und die Wand des zwischen dem versteiften Bereich (618) des Kopfteils und dem Übergang in den Halterand (608) liegenden Teils (619) des Kopfteils in Form eines Rollbalgs und/oder Federbalgs ausgebildet sind, und daß eine Verbindung (695) zwischen dem hierdurch begrenzten Hohlraum (623) und dem zwischen der Außenseite des Saugstutzens und der Innenseite der Melkbecherhülse liegenden Pulsraums (610) vorgesehen ist.

26. Zitzengummi nach Anspruch 25, **dadurch gekennzeichnet, daß** die Verbindung durch wenigstens eine im wesentlichen axial verlaufende Durchgangsöffnung (695) in dem Ring (640) gebildet ist.

## Claims

1. A rubber teat comprising a head member (3) substantially rotationally symmetric with a longitudinal axis, with a aperture (49) for insertion of the teat, a retaining edge (8, 9) to engage over a teat cup sleeve (2), and a suction stub joined to the head member (3), the end of the head member (3) opposite the teat insertion aperture (49) merging into the retaining edge (8, 9), **characterised in that** the wall of the head member (3) is stiffened in a region (18) located between the teat insertion aperture (49) and the transition to the retaining edge (8), that the end of the suction stub (4) towards the teat insertion aperture (49) merges into the head member (3) at the level of the stiffened region (18), that at least a portion of a wall area (19) of the head member (3) located between the stiffened region (18) and the transition to the retaining edge (8, 9) is elastically deformable relative to the stiffened region (18), and that this wall area (19) of the head member (3) and the end of the suction stub (4) towards the teat insertion aperture together bound a cavity (23) between them.

2. A rubber teat according to claim 1, **characterised in that** the retaining edge (8, 9) of the rubber teat, when mounted on the teat cup sleeve (2), begins approximately at the level of the top edge of the sleeve and extends over part of the length of the outside of the sleeve.

3. A rubber teat according to claim 1 or 2, **characterised in that** the wall section (19) located between the transition to the retaining edge (8, 9) and the stiffened region (18) of the head member is in the form of a wall section (19) continuously enlarging radially outwardly and upwardly towards the stiffened region.

4. A rubber teat according to claim 1 or 2, **characterised in that** the wall section (219) located between the transition to the retaining edge (208, 209) and the stiffened region (218) of the head member (203) extends substantially radially outwards.

5. A rubber teat according to any of claims 1 to 4, **characterised in that** the wall thickness of the suction stub (4) increases before its transition to the stiffened region (18) of the head member (3).

6. A rubber teat according to claim 5, **characterised in that** the wall thickness becomes increasingly larger.

7. A rubber teat according to any of claims 1 to 6, **characterised in that** an enlargement of the wall thickness of the suction stub (4) is provided, in the portion of the stub located approximately in the region between the radius corresponding to the inner wall of the teat cup sleeve (2) and the transition to the stiffened part (18) of the head member (3).

8. A rubber teat according to any of claims 1 to 7, **characterised in that** a constriction (352) is provided at the transition between the end of the head member (303) remote from the teat insertion aperture (49) and the retaining edge (8, 9) and ensures elastic deformation in the form of a bending joint.

9. A rubber teat according to any of claims 1 to 8, **characterised in that** a constriction (351) is provided at the transition between the stiffened part (318) of the head member (303) and the part (319) of the head member (303) towards retaining edge, and ensures elastic deformation in the form of a bending joint.

10. A rubber teat according to any of claims 1 to 9, **characterised in that** the stiffening in the head member region is produced by increasing the wall thickness of the head member.

11. A rubber teat according to any of claims 1 to 10, **characterised in that** the stiffening is provided in the region of the maximum outside diameter of the head member.

12. A rubber teat according to any of claims 1 to 11, **characterised in that** a ring running round the head member (3) is cast into the wall to stiffen the head member.

13. A rubber teat according to claim 1, **characterised in that** a ring (131, 240) lying against the inside of the head member is inserted in the cavity (123, 223) to stiffen the head member.

14. A rubber teat according to any of claims 1 to 13, **characterised in that** the stiffened region (118) is formed by a cylindrical wall section of constant outside diameter.

15. A rubber teat according to any of claims 1 to 14, **characterised in that** the part (419) of the head member located between the stiffened region (418) and the transition with the retaining edge (408) is in the form of outwardly curved rolling bellows.

16. A rubber teat according to any of claims 1 to 14, **characterised in that** the part (519) of the head member (503) located between the stiffened region (518) and the transition with the retaining edge (508) is in the form of spring bellows.

17. A rubber teat according to any of claims 1 to 16, **characterised in that** the part (519) of the head member located between the stiffened region (518) and the transition with the retaining edge (508) merges - at the end towards the stiffened region - into the stiffened end (521) of the suction stub (504) towards the teat insertion aperture.

18. A rubber teat according to any of claims 1 to 17, **characterised in that** substantially longitudinally extending ribs (26) and/or incisions are formed on at least one of the facing surfaces (24, 25) of the suction stub (4) or the inside of the head member (3, 19), or of the parts (9) of the retaining edge lying against the inside of the teat cup sleeve (2) for support.

19. A rubber teat according to any of claims 1 to 18, **characterised in that** recesses are provided inside the retaining edge (108), to engage over projections (135) formed on the outside of the teat cup sleeve (102).

20. A rubber teat according to any of claims 1 to 19, **characterised in that** a ring (340) which can be placed on the edge of the teat cup sleeve facing towards the head member (303) of the rubber teat is provided, the ring having an edge (342) extending substantially longitudinally of the teat cup sleeve and being offset radially outwardly towards the outside wall of the sleeve.

21. A rubber teat according to claim 20, **characterised in that** an annular recess is formed in the retaining edge of the rubber teat, into which recess the edge (342) of the ring (340) can be inserted, so that the retaining edge of the teat engages over the edge internally and externally.

22. A rubber teat according to claim 20 or 21, **characterised in that** the ring (340) has a second edge (343), which extends substantially longitudinally of the teat cup sleeve and which is offset radially inwardly towards the suction stub (3).

23. A rubber teat according to claim 22, **characterised in that** an annular recess (344) is formed between the first and second edges (342, 343) of the ring (340), with which an annular section (309) of the retaining edge of the rubber teat can be brought into engagement.

24. A rubber teat according to claim 22 or 23, **characterised in that** ribs (326) or recesses extending substantially in a longitudinal direction are provided on the surface of the second edge (343) of the ring (340) facing radially inwardly.

25. A rubber teat according to claim 22, **characterised in that** a fixing edge (690) engaging over the second edge (643) of the ring (640) is provided on the outside of the suction stub (604), that the wall of the part of the suction stub (604) located between the stiffened region (618) of the head member (603) and the fixing edge (690), and the wall of the part (619) of the head member located between the stiffened region (618) of the head member and the transition to the retaining edge (608) are in the form of rolling bellows and/or spring bellows, and that a connection (695) is provided between the cavity (623) defined thereby and the pulse chamber (610) located between the outside of the suction stub and the inside of the teat cup sleeve.

26. A rubber teat according to claim 25, **characterised in that** the connection is formed by at least one passage (695) in the ring (640), extending substantially in an axial direction.

## Revendications

1. Manchon trayeur comportant une partie de tête (3) sensiblement symétrique en rotation par rapport à un axe longitudinal, avec une ouverture d'introduction (49) pour le trayon et un rebord de fixation (8, 9) destiné à recouvrir un gobelet trayeur (2), et une tubulure d'aspiration reliée à la partie de tête (3), la partie de tête (3) se prolongeant à son extrémité opposée à l'ouverture d'introduction (49) pour le trayon par le rebord de fixation, **caractérisé en ce que** la paroi de la partie de tête (3) est rigide dans une zone (18) située entre l'ouverture d'introduction (49) pour le trayon et la transition avec le rebord de fixation (8), **en ce que** l'extrémité de la tubulure d'aspiration (4) qui est tournée vers l'ouverture d'introduction (49) pour le trayon se prolonge à la hauteur de ladite zone renforcée (18) par la partie de tête (3), **en ce qu'**au moins une zone partielle de la zone de paroi (19) de la partie de tête (3) située entre la zone renforcée (18) et la transition avec le rebord de fixation (8, 9) est élastiquement déformable par rapport à ladite zone renforcée (18), et **en ce que** cette zone de paroi (19) de la partie de tête (3) définit avec l'extrémité de la tubulure d'aspiration (4) tournée vers l'ouverture d'introduction pour le trayon une cavité (23).

2. Manchon trayeur selon la revendication 1, **caractérisé en ce que** son rebord de fixation (8, 9), en position montée sur le gobelet trayeur, commence à peu près à la hauteur du bord supérieur de celui-ci et s'étend sur une partie de la longueur du côté extérieur du gobelet trayeur (2).

3. Manchon trayeur selon la revendication 1 ou 2, **caractérisé en ce que** la zone de paroi (19) située entre la transition avec le rebord de fixation (8, 9) et la zone renforcée (18) de la partie de tête est conçue comme une zone de paroi (19) qui va en s'élargissant radialement vers l'extérieur et vers le haut en direction de la zone renforcée.

4. Manchon trayeur selon la revendication 1 ou 2, **caractérisé en ce que** la zone de paroi (219) située entre la transition avec le rebord de fixation (208, 209) et la zone renforcée (218) de la partie de tête (203) s'étend sensiblement radialement vers l'extérieur.

5. Manchon trayeur selon l'une des revendications 1 à 4, **caractérisé en ce que** l'épaisseur de paroi de la tubulure d'aspiration (4) augmente avant la transition entre celle-ci et la partie renforcée (18) de la partie de tête (3).

6. Manchon trayeur selon la revendication 5, **caractérisé en ce que** l'épaisseur de paroi augmente de plus en plus.

7. Manchon trayeur selon l'une des revendications 1 à 6, **caractérisé en ce qu'**il est prévu une augmentation de l'épaisseur de paroi de la partie de la tubulure d'aspiration (4) qui se trouve à peu près dans la zone située entre le rayon correspondant à la paroi intérieure du gobelet trayeur (2) et la transition avec la partie renforcée (18) de la partie de tête (3).

8. Manchon trayeur selon l'une des revendications 1 à 7, **caractérisé en ce qu'**il est prévu, au niveau de la transition entre l'extrémité de la partie de tête (303) opposée à l'ouverture d'introduction (49) pour le trayon et le rebord de fixation (308, 309), un rétrécissement (352) qui garantit une déformation élastique sous la forme d'un joint articulé de flexion.

9. Manchon trayeur selon l'une des revendications 1 à 8, **caractérisé en ce qu'**il est prévu, au niveau de la transition entre la partie renforcée (318) de la partie de tête (303) et la partie (319) de celle-ci qui est tournée vers le rebord de fixation, un rétrécissement (351) qui garantit une déformation élastique sous la forme d'un joint articulé de flexion.

10. Manchon trayeur selon l'une des revendications 1 à 9, **caractérisé en ce que** le renforcement dans la zone de la partie de tête est obtenu grâce à une augmentation de l'épaisseur de paroi de la partie de tête.

11. Manchon trayeur selon l'une des revendications 1 à 10, **caractérisé en ce que** le renforcement est prévu dans la zone du diamètre extérieur maximal de la partie de tête.

12. Manchon trayeur selon l'une des revendications 1 à 11, **caractérisé en ce que** pour renforcer la partie de tête (3), on coule dans la paroi une bague qui fait tout le tour de la partie de tête.

13. Manchon trayeur selon la revendication 1, **caractérisé en ce que** pour renforcer la partie de tête, on place dans la cavité (123, 223) une bague (131, 240) appliquée contre le côté intérieur de la partie de tête.

14. Manchon trayeur selon l'une des revendications 1 à 13, **caractérisé en ce que** la zone renforcée (118) est définie par une zone de paroi cylindrique à diamètre extérieur constant.

15. Manchon trayeur selon l'une des revendications 1 à 14, **caractérisé en ce que** la partie (419) de la partie de tête qui est située entre la zone renforcée (418) et la transition avec le rebord de fixation (408) a la forme d'un soufflet bombé vers l'extérieur.

16. Manchon selon l'une des revendications 1 à 14, **caractérisé en ce que** la partie (519) de la partie de tête (503) qui est située entre la zone renforcée (518) et la transition avec le rebord de fixation (508) a la forme d'un soufflet élastique.

17. Manchon selon l'une des revendications 1 à 16, **caractérisé en ce que** la partie (519) de la partie de tête qui est située entre la zone renforcée (518) et la transition avec le rebord de fixation (508) se prolonge, à son extrémité tournée vers la zone renforcée, par l'extrémité renforcée (521) de la tubulure d'aspiration (504) qui est tournée vers l'ouverture d'introduction pour le trayon.

18. Manchon selon l'une des revendications 1 à 17, **caractérisé en ce qu'**il est prévu, sur l'une au moins des surfaces (24, 25) de la tubulure d'aspiration (4) tournées l'une vers l'autre ou sur le côté intérieur de la partie de tête (3, 19) ou sur les parties (9) du rebord de fixation qui sont appliquées sur le côté intérieur du gobelet trayeur (2) en vue de la fixation, des nervures (26) et/ou des encoches qui s'étendent sensiblement dans le sens longitudinal.

19. Manchon trayeur selon l'une des revendications 1 à 18, **caractérisé en ce qu'**il est prévu sur le côté intérieur du rebord de fixation (108) des creux destinés à recouvrir des saillies (135) formées sur le côté extérieur du gobelet trayeur (102).

20. Manchon trayeur selon l'une des revendications 1 à 19, **caractérisé en ce qu'**il est prévu une bague (340) apte à être enfilée sur le bord du gobelet trayeur tourné vers la partie de tête (303) du manchon trayeur et présentant un bord (342) qui s'étend sensiblement dans le sens longitudinal du gobelet trayeur et qui est décalé radialement vers l'extérieur par rapport à la paroi extérieure du gobelet trayeur.

21. Manchon trayeur selon la revendication 20, **caractérisé en ce qu'**il est prévu dans le rebord de fixation du manchon trayeur un creux annulaire dans lequel peut être placé le bord (342) de la bague (340), de sorte que le rebord de fixation du manchon trayeur recouvre ce bord à l'intérieur et à l'extérieur.

22. Manchon trayeur selon la revendication 20 ou 21, **caractérisé en ce que** la bague (340) comporte un second bord (343) qui s'étend sensiblement dans le sens longitudinal du gobelet trayeur et qui est décalé radialement vers l'intérieur par rapport à la tubulure d'aspiration (3).

23. Manchon trayeur selon la revendication 22, **caractérisé en ce qu'**il est prévu entre les premier et second bords (342, 343) de la bague (340) un creux annulaire (344) avec lequel une section annulaire (309) du rebord de fixation du manchon trayeur peut être mise en contact.

24. Manchon trayeur selon la revendication 22 ou 23, **caractérisé en ce qu'**il est prévu sur la surface du second bord (343) de la bague (340) tournée radialement vers l'intérieur des nervures (326) ou des creux qui s'étendent sensiblement dans le sens longitudinal.

25. Manchon trayeur selon la revendication 22, **caractérisé en ce qu'**il est prévu sur le côté extérieur de la tubulure d'aspiration (604) un rebord de blocage (690) qui recouvre le second bord (643) de la bague (640), **en ce que** la paroi de la partie de la tubulure d'aspiration (604) située entre la zone renforcée (618) de la partie de tête (603) et le rebord de blocage (690), et la paroi de la partie (619) de la partie de tête située entre la zone renforcée (618) de ladite partie de tête et la transition avec le rebord de fixation (608) ont la forme d'un soufflet et/ou d'un soufflet élastique, et **en ce qu'**il est prévu une liaison (695) entre la cavité (623) ainsi délimitée et la chambre de pulsation (610) située entre le côté extérieur de la tubulure d'aspiration et le côté intérieur du gobelet trayeur.

26. Manchon trayeur selon la revendication 25, **caractérisé en ce que** ladite liaison est formée par au moins une ouverture de passage (695) sensiblement axiale dans la bague (640).
